# FASCICULE DE BREVET EUROPEEN

(11) **EP 0 740 101 B1**
(45) Date de publication et mention de la délivrance du brevet: **14.06.2000**
(21) Numéro de dépôt: 96420142.0
(22) Date de dépôt: 25.04.1996
(51) Int. Cl.: F16L 37/40, F16L 37/42

(54) **Raccord rapide à clapet chargé autonome**
Schnellkupplung mit einem selbständig belasteten Ventil
Quick acting coupling having an autonomously loaded valve

(30) Priorité: 26.04.1995 FR 9505240
(43) Date de publication de la demande: 30.10.1996
(73) Titulaire: STAUBLI FAVERGES, 74210 Faverges (FR)
(72) Inventeur: Lacroix, Jean-Jacques, 74330 Lovagny (FR); Laporte, Christophe, 74210 Doussard (FR)
(74) Mandataire: Myon, Gérard Jean-Pierre

(56) Documents cités:
- AU-B- 406 286
- FR-A- 1 355 712
- GB-A- 1 143 013
- US-A- 3 566 918
- US-A- 3 873 062

## Description

La présente invention a trait aux dispositifs de raccords rapides utilisés pour la jonction démontable des canalisations, et elle vise plus particulièrment ceux qui comprennent deux éléments mâle et femelle fixés aux extrémités des canalisations à relier et propres à s'emmancher l'un à l'intérieur de l'autre en provoquant l'ouverture automatique d'un clapet chargé prévu à l'intérieur de l'élément femelle.

Une telle construction est connue du document US-A-3873062.

Dans les constructions connues, le corps de l'élément femelle est généralement constitué par l'assemblage étanche de deux pièces tubulaires, ordinairement vissées l'une dans l'autre en assurant du même coup le montage du clapet et du ressort de fermeture qui est associé à celui-ci, lequel clapet, directement monté dans l'alèsage du corps, coopère avec un siège formé par un joint annulaire convenablement retenu à l'intérieur de l'une des pièces précitées.

On conçoit qu'une telle structure se prête assez mal à un montage automatisé à l'aide de robots ou manipulateurs. On rappelera par ailleurs que la conformation et les dimensions de la pièce arrière du corps qui est destinée à être assujettie à l'extrémité d'une canalisation varient en fonction du type de jonction envisagé, ce qui complique évidemment le stockage des raccords si l'on entend disposer d'une gamme étendue de produits.

C'est à ces inconvénients que la présente invention entend principalement remédier.

Le dispositif de raccord suivant l'invention est défini à la revendication 1.

En fait l'invention consiste à réaliser le clapet, une bague extérieure qui l'entoure, le ressort de fermeture qui est maintenu entre ladite bague porte-clapet et le clapet, et le joint ou siège monté sur la bague porte-clapet, sous la forme d'un ensemble autonome propre à être introduit en bloc à l'intérieur du corps de l'élément femelle et à être retenu en place dans celui-ci jusqu'à assujettissement de la pièce tubulaire arrière dudit corps, par friction de la périphérie déformable du joint ou siège contre la paroi lisse de l'alèsage du corps qui renferme ledit ensemble, lequel assujettissement peut être obtenu par simple encliquetage élastique.

Le dessin annexé, donné à titre d'exemple, permettra de mieux comprendre l'invention, les caractéristiques qu'elle présente et les avantages qu'elle est susceptible de procurer :
Fig. 1 montre, préalablement à leur assemblage, les trois ensembles principaux qui constituent l'élément femelle d'un raccord rapide suivant l'invention.
Fig. 2 est une coupe axiale à plus grande échelle de l'ensemble clapet chargé.
Fig. 3 est une coupe transversale suivant le plan indiqué en III-III en fig. 2.
Fig. 4 est une coupe axiale de l'élément femelle finalement réalisé, avec l'élément mâle à la position emmanchée.

On a supposé que le raccord rapide pris en considération était du type de ceux décrits dans la Demande de brevet EP-A-722063 publiée le 17.07.1996 au nom de la présente Demanderesse pour "Raccord rapide de sécurité pour la jonction amovible de canalisations", demande à laquelle on pourra se référer pour plus de détails structurels.

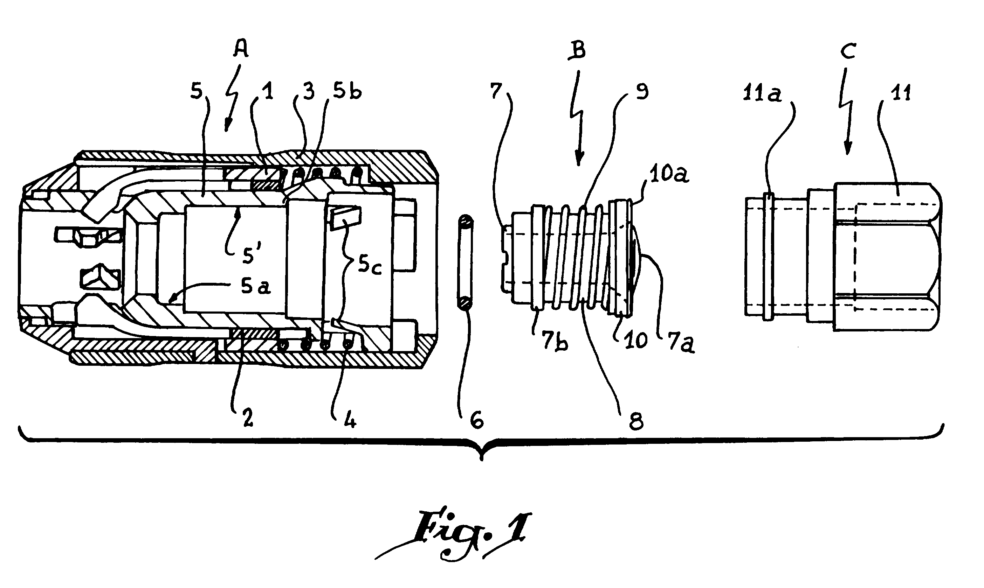

On se contentera de rappeler que dans ce type de raccord, le mécanisme de verrouillage destiné à l'immobilisation axiale de l'élément mâle comprend deux jeux concentriques de griffes 1 et 2 (fig. 1) commandés par un fourreau coulissant de manoeuvre 3 associé à un ressort de rappel 4.

Il doit néanmoins être observé que la présente invention est applicable à tous les types de raccords rapides à clapet chargé, quel que soit l'agencement du mécanisme destiné au verrouillage de l'élément mâle à l'intérieur de l'élément femelle.

Conformément à l'invention, l'élément femelle du raccord est formé par trois ensembles principaux respectivement référencés A, B et C en fig. 1.

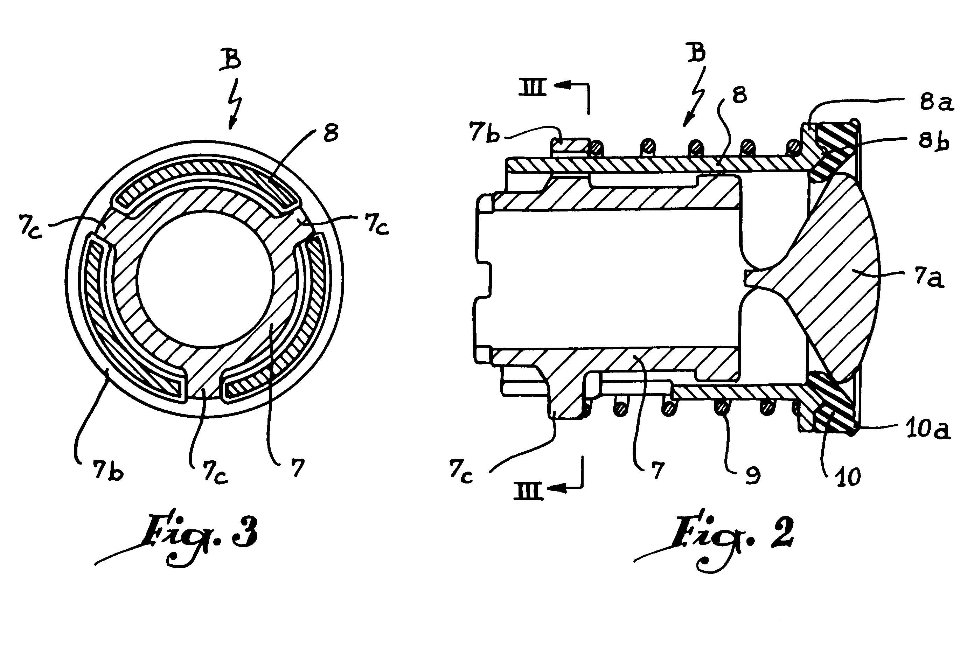

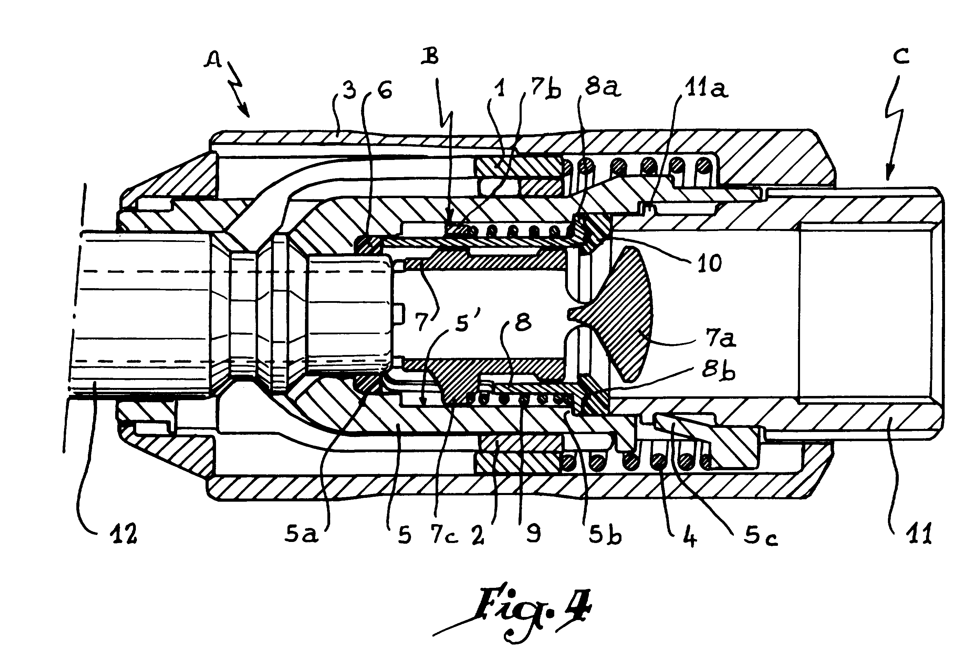

L'ensemble A comprend essentiellement une pièce tubulaire 5 qui est équipée du mécanisme de verrouillage 1-2-3-4 ci-dessus mentionné. Cette pièce 5, complétée par un joint torique intérieur 6 destiné à venir se loger dans une cavité annulaire 5a de son alésage axial 5', reçoit l'ensemble B qui a été détaillé en fig. 2 et 3.

Comme montré, cet ensemble B comprend un clapet constitué par un manchon coulissant 7 qui porte à l'une de ses extrémités une tête d'obturation 7a convenablement profilée. Au voisinage de son extrémité opposée, le manchon ou clapet 7 est pourvu d'une couronne 7b qui est perforée suivant son axe longitudinal pour le montage et le guidage d'une bague extérieure porte-clapet 8, fendue longitudinalement pour laisser place aux bras radiaux 7c définis par les perforations du manchon. Un ressort 9, engagé sur la bague porte-clapet 8 entre un épaulement 8a de celle-ci et la couronne 7b du manchon 7, tend à repousser ce dernier et à appliquer élastiquement sa tête 7a contre un siège d'étanchéité porté par ladite bague 8. Ce siège est constitué par un joint 10 en un élastomère naturel ou synthétique.

On observera que le siège ou joint 10 est profilé pour comporter d'une part une cavité annulaire propre à venir se centrer sur une saillie correspondante 8b prévue sur la face terminale de la bague 8, d'autre part une lèvre débordante 10a.

On conçoit que l'appui de la tête 7a contre le joint 10 limite le déplacement axial du clapet 7 sous l'effet du ressort 9, ce dernier assurant lui-même la retenue en place dudit joint. Dans ces conditions, l'ensemble B se comporte bien comme un ensemble autonome unique dont les pièces constitutives ne peuvent se dégager intempestivement les unes des autres

Cet ensemble autonome B est ainsi susceptible d'être introduit axialement dans le débouché arrière de l'alésage 5' de la pièce tubulaire principale 5 de l'ensemble A, à la manière illustrée en fig. 4. L'épaulement 8a vient buter contre un épaulement interne 5b de la pièce 5, en enfermant le joint 6 qui est ainsi maintenu dans la cavité 5a. Il est important d'observer que par suite de son caractère débordant, la lèvre périphérique 10a du joint 10 se trouve coincée dans l'alésage axial de la pièce 5, si bien que l'ensemble B est retenu en place par friction à l'intérieur de l'ensemble A.

Cet ensemble A muni de l'ensemble B est ainsi susceptible d'être stocké en l'état pour être équipé, au moment opportun, de l'ensemble C. Celui-ci est en fait constitué par une pièce tubulaire 11 dont la partie antérieure est destinée à s'engager dans le débouché arrière de l'alésage 5' de la pièce principale 5, tandis que sa partie arrière est profilée pour assurer sa fixation à l'extrémité d'une canalisation.

La fixation de la pièce 11 dans la pièce 5 peut être opérée, à la façon usuelle, par vissage et/ou collage. Toutefois, conformément à une caractéristique particulièrement avantageuse de l'invention, on fait par découpage comporter à la paroi interne de l'alésage axial 5' de la pièce 5 une série de languettes longitudinales 5c orientées obliquement vers l'intérieur, d'arrière en avant. Compte tenu de cette orientation oblique, ces languettes 5c se déforment lorsque la pièce 11 est engagée axialement à force dans l'alésage 5' de la pièce 5 et reviennent élastiquement s'encliqueter en arrière d'une saillie annulaire 11a prévue à cet effet sur la périphérie de ladite pièce 11. Tout démontage de cette dernière est ainsi rendue impossible, étant observé que le montage ne nécessite aucun outillage spécial et peut donc être très simplement effectué au moment de la livraison des raccords.

On notera que le siège ou joint 10 assure simultanément, par appui et pincement entre l'épaulement 8a et le bord terminal de la pièce 11, l'étanchéité de l'assemblage des deux pièces 5 et 11 qui forment le corps de l'élément femelle.

Le fonctionnement du clapet 7-7a est autrement identique à celui des clapets classiques, en ce sens qu'il est repoussé axialement en position d'ouverture lorsque l'élément mâle 12 du raccord est emmanché dans le corps 5-11 de l'élément femelle.

On conçoit que la retenue par friction de l'ensemble B est susceptible d'être obtenue, non plus en prévoyant une lèvre annulaire débordante 10a, mais en conférant à la périphérie du joint 10 une déformabilité accentuée, propre à assurer une friction contre la paroi de l'alèsage 5' .

## Revendications

1. Raccord rapide pour la jonction amovible des canalisations, du genre dans lequel le corps tubulaire (5-11) d'un élement femelle, constitué par l'assemblage étanche d'une pièce principale (5) et d'une pièce arrière (11), renferme un clapet (7) qui est associé à un joint (10) formant siège et à un ressort de fermeture (9) et qui est amené en position d'ouverture lors de l'emmanchement de l'élément mâle (12) dans ledit élément femelle, caractérisé en ce que le clapet (7) lui-même, une bague extérieure (8) qui l'entoure, le joint (10) qui est porté par l'extrémité antérieure de cette bague (8), et le ressort (9) qui est maintenu entre le clapet et ladite bague (8), forment un ensemble autonome (B) qui, jusqu'à assujettissement de la pièce arrière (11) du corps tubulaire (5-11), est maintenu axialement dans l'alèsage axial (5') de la pièce principale (5), par friction de la paroi déformable du joint ou siège (10) contre la paroi lisse dudit alèsage (5').

2. Raccord suivant la revendication 1, caractérisé en ce que le joint ou siège (10) comporte une lèvre annulaire débordante (10a).

3. Raccord suivant les revendications 1 ou 2, caractérisé en ce que la face terminale de la bague (8) comporte une saillie annulaire (8b) qui coopère avec une cavité annulaire correspondante ménagée dans le joint (10) pour assurer le centrage de ce dernier sur la bague (8).

4. Raccord suivant les revendications 1, 2 et 3, caractérisé en ce que le joint (10) assure, par appui et pincement entre un épaulement extérieur (8a) de la bague (8) et le bord terminal de la pièce arrière (11), l'étancheïté de l'assemblage des deux pièces (5 et 11) qui forment le corps de l'élément femelle.

5. Raccord suivant l'une quelconque des revendications 1 à 4, caractérisé en ce que la fixation de la pièce arrière (11) du corps de l'élément femelle dans la pièce principale (5) est opérée par encliquetage élastique.

6. Raccord suivant la revendication 5, caractérisé en ce que la paroi intérieure de l'alésage axial de la pièce principale (5) est découpée de languettes longitudinales (5c) orientées obliquement pour se déformer élastiquement et venir s'appliquer contre la périphérie de la pièce (11) en arrière d'une saillie annulaire (11a) de cette dernière.

## Patentansprüche

1. Schnellkupplung für die lösbare Verbindung von Leitungen, von der Art, bei der das röhrenförmige Gehäuse (5-11) eines Buchsenelements, gebildet durch den dichten Zusammenbau eines Hauptteils (5) und eines hinteren Teils (11), ein Ventil (7) verschließt, das einem Dichtring (10), der einen Sitz bildet, und einer Schließfeder (9) zugeordnet ist, und das durch das Hineinstecken des Steckelements (12) in das genannte Buchsenelement in die geöffnete Stellung gebracht wird,
**dadurch gekennzeichnet,**
dass das Ventil (7) selbst, ein es umgebender Außenring (8), der durch das vordere Ende dieses Außenrings (8) getragene Dichtring (10) und die zwischen dem Ventil und dem Außenring (8) eingespannte Feder (9) eine selbstständige Einheit (B) bilden, die bis zur Befestigung des hinteren Teils (11) des röhrenförmigen Gehäuses (5-11) axial in der Axialbohrung (5') des Hauptteils (5) festgehalten wird mittels Reibung zwischen der verformbaren Wand des Dichtrings oder Sitzes (10) und der glatten Wand der genannten Bohrung (5').

2. Kupplung nach Anspruch 1, dadurch gekennzeichnet, dass der Dichtring oder Sitz (10) eine überstehende ringförmige Lippe (10a) umfasst.

3. Kupplung nach den Ansprüchen 1 oder 2, dadurch gekennzeichnet, dass die Endfläche des Außenrings (8) einen ringförmigen Vorsprung (8b) umfasst, der mit einer an dem Dichtring (10) ausgebildeten entspechenden ringförmigen Vertiefung zusammenwirkt, um die Zentrierung dieses letzteren auf dem Außenring (8) sicherzustellen.

4. Kupplung nach den Ansprüchen 1, 2 und 3, dadurch gekennzeichnet, dass der Dichtring (10) durch Abstützung und Quetschung zwischen einer äußeren Schulter (8a) des Rings (8) und dem Endrand des hinteren Teils (11) die Dichtheit des Zusammenbaus der beiden Teile (5 und 11) gewährleistet, die das Gehäuse des Buchsenelements bilden.

5. Kupplung nach einem der Ansprüche 1 bis 4, dadurch gekennzeichnet, dass die Befestigung des hinteren Teils (11) des Gehäuses des Buchsenelements in dem Hauptteil (5) durch elastisches Einrasten erfolgt.

6. Kupplung nach Anspruch 5, dadurch gekennzeichnet, dass die innere Wand der Axialbohrung des Hauptteils (5) so geschnitten bzw. eingeschnitten ist, dass sie Längszungen (5c) aufweist, die schräg ausgerichtet sind, sodass sie sich elastisch verformen und gegen den Rand des Teils (11) drücken, hinter einem ringförmigen Vorsprung (11a) dieses letzteren.

## Claims

1. A rapid action coupling for the detachable connection of pipes, of the type in which the tubular body (5-11) of a female member, consisting of a leak-proof assembly of a main component (5) and a rear component (11), comprises a clack valve (7) which is associated with a gasket (10) forming the seat and a closing spring (9) and which is brought into an open position when said male member (12) is fitted inside said female member, characterised in that the clack valve (7) itself, an outer ring (8) which surrounds it, the gasket (10) which is carried by the anterior end of said ring (8) and the spring (9) which is held between the clack valve and said ring (8) form an autonomous assembly (B) which, until securing of the rear component (11) of the tubular body (5-11), is held axially in the axial bore (5') of the main component (5) by friction between the deformable wall of the gasket or seat (10) and the smooth wall of said bore (5').

2. A coupling according to claim 1, characterised in that the gasket or seat (10) comprises a projecting annular lip (10a).

3. A coupling according to claim 1 or claim 2, characterised in that the end face of the ring (8) comprises an annular projection (8b) which cooperates with a corresponding annular cavity formed in the gasket (10) to ensure centring of the latter on the ring (8).

4. A coupling according to claims 1, 2 and 3, characterised in that the gasket (10), by support and squeezing between an outer shoulder (8a) of the ring (8) and the end edge of the rear component (11), ensures tightness of the assembly of the two components (5 and 11) which constitute the body of the female member.

5. A coupling according to any one of claims 1 to 4,
characterised in that securing of the rear component (11) of the body of the female member in the main component (5) is effected by resilient catching.

6. A coupling according to claim 5, characterised in that the inner wall of the axial bore of the main component (5) has cut from it longitudinal tongues (5c) oriented obliquely so as to deform resiliently and to be applied against the periphery of the component (11) behind an annular projection (11a) of the latter.
